# EUROPEAN PATENT APPLICATION

(11) **EP 3 351 365 A1**
(43) Date of publication of application: **25.07.2018**
(21) Application number: 18151572.7
(22) Date of filing: 15.01.2018
(51) Int. Cl.: B29C 64/40, B33Y 10/00, B33Y 30/00, B33Y 80/00, B29C 64/124

(54) **MANUFACTURING METHOD AND SHAPING APPARATUS FOR SHAPED OBJECT**

(30) Priority: 20.01.2017 JP 2017008124
(71) Applicant: Mimaki Engineering Co., Ltd., Tomi-City, Nagano 389-0512 (JP)
(72) Inventor: TANAKA, Yoshihiro, Tomi-city, Nagano 389-0512 (JP)
(74) Representative: Horn Kleimann Waitzhofer Patentanwälte PartG mbB

(57) **Abstract**

A shaped object manufacturing method for shaping a three-dimensional shaped object by layering a plurality of layers in a layering direction, in which a hollow containing region, which is a first region formed by layering a plurality of layers in the layering direction, and an upper shaping region, which is a second region formed by layering a plurality of layers in the layering direction on the hollow containing region, are formed, and a cross section of the hollow containing region at a position along the layering direction includes a plurality of holes at least when shaping of the shaped object is completed.

## Description

### TECHNICAL FIELD

This disclosure relates to a manufacturing method and a shaping apparatus for a shaped object.

### DESCRIPTION OF THE BACKGROUND ART

There are known object shaping apparatuses (3D printers) used to manufacture three-dimensional shaped objects (for example, Japanese Unexamined Patent Publication No. 2015-71282). Such a shaping apparatus manufactures the shaped object, for example, by layering a plurality of layers formed by a shaping material along a predetermined layering direction.

### SUMMARY

In a case of shaping a shaped object by layering a plurality of layers, for example, each layer configuring the shaped object is formed by curing a material in a liquid state. In this case, however, there may be a case where warping is generated in a hardened layer due to an influence of, for example, a slight volume change upon curing of the material. More specifically, for example, when ultraviolet curing ink is used as the shaping material, warping may in some cases be generated in a cured ink layer due to an influence of curing shrinkage that is generated when the ink is cured.

Further, when such warping is generated, it becomes difficult to shape the shaped object with high accuracy in some cases. Further, for example, there may be a case where a warped layer comes in contact with an ejection head (such as an ink jet head) for ejecting the shaping material and hinders shaping operation. Thus, the present disclosure aims to provide a manufacturing method and a shaping apparatus for a shaped object that can solve the above problem.

The inventor of the present application eagerly conducted studies on a method for preventing the generation of the warping in the layers of the shaping material and for more suitably performing the shaping. In regard to a cause of the warping generation in the layers of the shaping material, the inventor considered an influence regarding an increase in stress generated over an entirety of a layer that is imposed by forming a uniform and continuous surface as the layer of the shaping material.

With further keen studies, the inventor made a finding, regarding a cross-sectional shape of the shaped object at a position along the layering direction, that a discontinuous shape with a plurality of holes can suitably suppress the warping. Further, the inventor found that by forming a region having such holes, the warping of the layer can suitably be suppressed even if a layer with a continuous surface is formed thereon. Moreover, the inventor found features essential for achieving such an effect, and achieved the present disclosure.

To solve the above problem, the present disclosure provides a manufacturing method for shaping a three-dimensional shaped object by layering a plurality of layers in a preset layering direction, the method including: forming a first region of the shaped object, which is formed by layering a plurality of layers in the layering direction; and forming a second region of the shaped object, which is formed by layering a plurality of layers in the layering direction on the first region, where a cross section of the first region at a position along the layering direction includes a plurality of holes at least when shaping of the shaped object is completed.

By configuring as above, for example, by forming the first region having a shape (profile) with the plurality of holes in its cross section, an influence of stress generated upon curing of the shaping material can suitably be reduced. Further, due to this, for example, warping can suitably be prevented, and the first region can be formed properly. Further, by forming the second region thereon, the second region can also be prevented suitably from warping. Further, due to this, for example, the shaped object can be shaped suitably with high accuracy.

Here, the second region is for example a plane in which a cross section at a position in the layering direction becomes discontinuous. In this case, the cross section being continuous refers to a state in which no hole or the like is intentionally formed in the cross section, for example. In this case, intentionally forming a hole or the like means to form the hole or the like intentionally as the shape of the shaped object, for example. Further, in this case, the first region comes to have a shape including a plurality of holes also in its upper surface, which is a surface on a second region side, for example. Due to this, the second region may be considered to be a region covering the plurality of holes in the upper surface of the first region.

Further, in a step of forming the first region, for example, the aforementioned first region is formed by forming the region including plural portions that are to become hollow when the shaping is completed. In this case, the plurality of hollows in the first region are formed by forming respective layers in a state of having a support material filled in the portions to become the hollows and by removing the support material before completing the shaping, for example.

Further, in a state when the shaping is completed, the first region may be formed as a region having a shape in which plural hollow three-dimensional figures are arranged, for example. In this case, the plural three-dimensional figures are preferably arranged without intervals between them by constituting adjacent figures with a common side or common surface. Further, as such a first region, for example, a region with a honeycomb structure in which hollow equilateral hexagonal pillars are arranged without any intervals between them can suitably be used.

Further, as such hollow figures, figures other than the equilateral hexagonal pillars may be used. In this case, polyhedrons each having an opening located at least at a part of one of surfaces thereof may suitably be used. In this case, the openings are used for removing the support material filled inside the polyhedrons during an operation of shaping, for example. Further, as such polyhedrons, for example, truncated octahedrons and the like may suitably be used. Further, as such polyhedrons, plural types of polyhedrons having shapes that are different from each other may be used. In this case, it is preferable to combine polyhedrons having the shape by which they are arranged without any intervals between them by making a common surface between adjacent polyhedrons.

Further, in this configuration, the first region may be a region having at least a part of its lower surface exposed to outside of the shaped object, for example. In this case, for the first region, having at least a part of its lower surface exposed to outside of the shaped object means that at least a part of each inner hollows is exposed to outside of the shaped object, for example. By configuring as above, for example, the support material or the like can suitably be removed even in cases of using the support material or the like to fill the hollows in the first region.

Further, the shaping of the shaped object may be considered to be performed by an ink jet method, for example. In this case, performing the shaping using the ink jet method means to perform the shaping by ejecting a material used for the shaping from an ink jet head, for example. Further, in this case, ultraviolet curing ink and the like may suitably be used as the material used for the shaping, for example.

This disclosure may further include the use of an object shaping apparatus configured correspondingly to the method. Similar effects can be achieved for example in such cases as well.

According to the present disclosure, a shaped object can be shaped suitably with high accuracy.

### BRIEF DESCRIPTION OF THE DRAWINGS

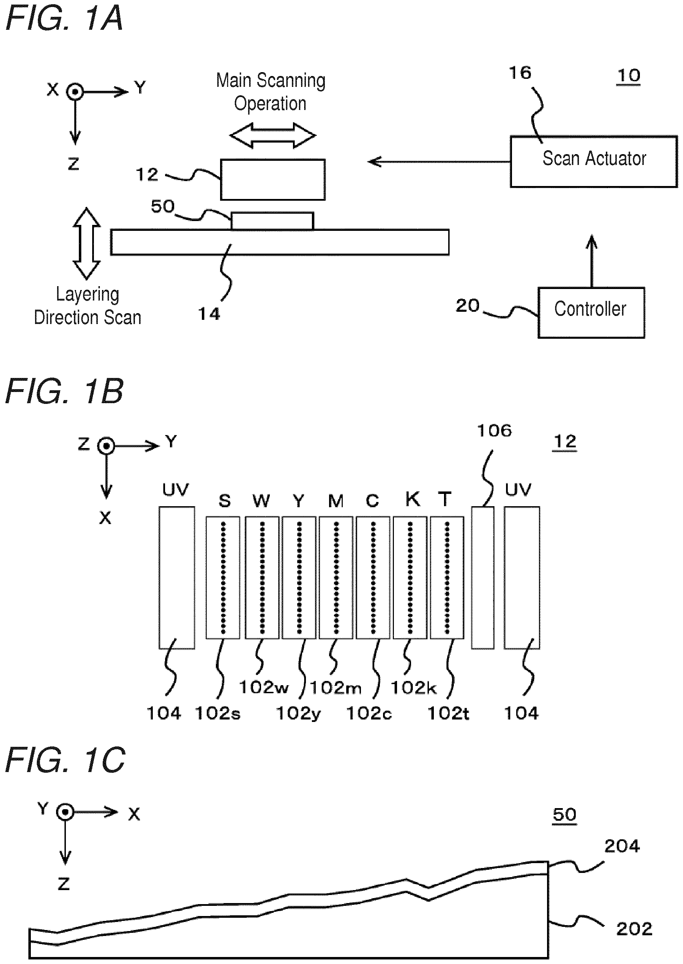

FIGs. 1A to 1C are diagrams explaining a manufacturing method for a shaped object according to an embodiment of this disclosure. FIG. 1A illustrates an example of a primary configuration of a shaping apparatus 10 used for shaping a shaped object. FIG. 1B illustrates an example of a configuration of a head 12 in the shaping apparatus 10. FIG. 1C schematically illustrates an example of a configuration of a shaped object 50 to be manufactured in this embodiment.

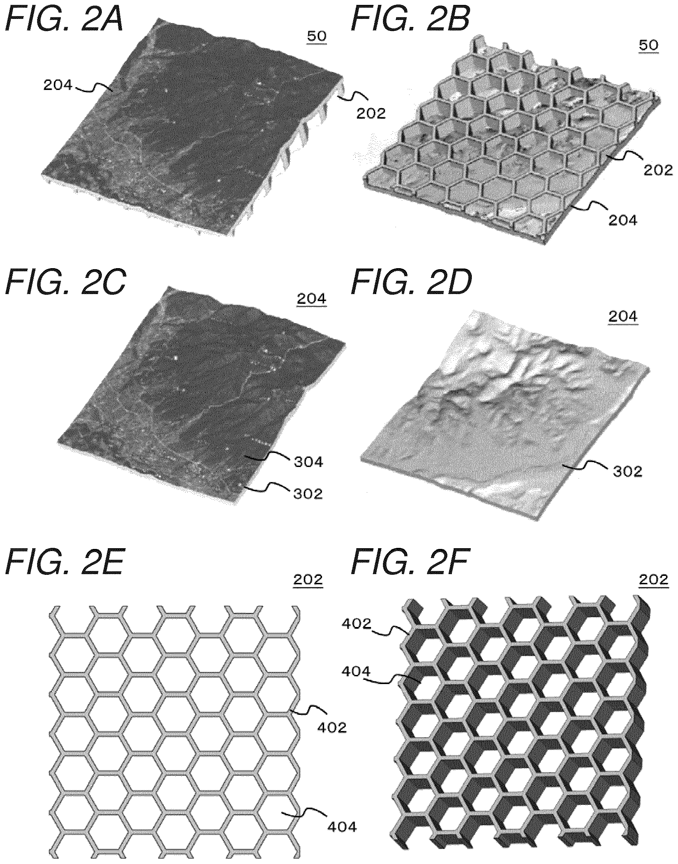

FIGs. 2A to 2F are diagrams illustrating an example of a more specific configuration of the shaped object 50. FIGs. 2A and 2B are perspective diagrams illustrating an example of the configuration of the shaped object 50. FIGs. 2C and 2D are diagrams further giving detailed description regarding an upper shaping region 204. FIG. 2E is a cross sectional diagram illustrating an example of a configuration of a hollow containing region 202. FIG. 2F is a perspective diagram of the hollow containing region 202 when seen from a lower side in a layering direction.

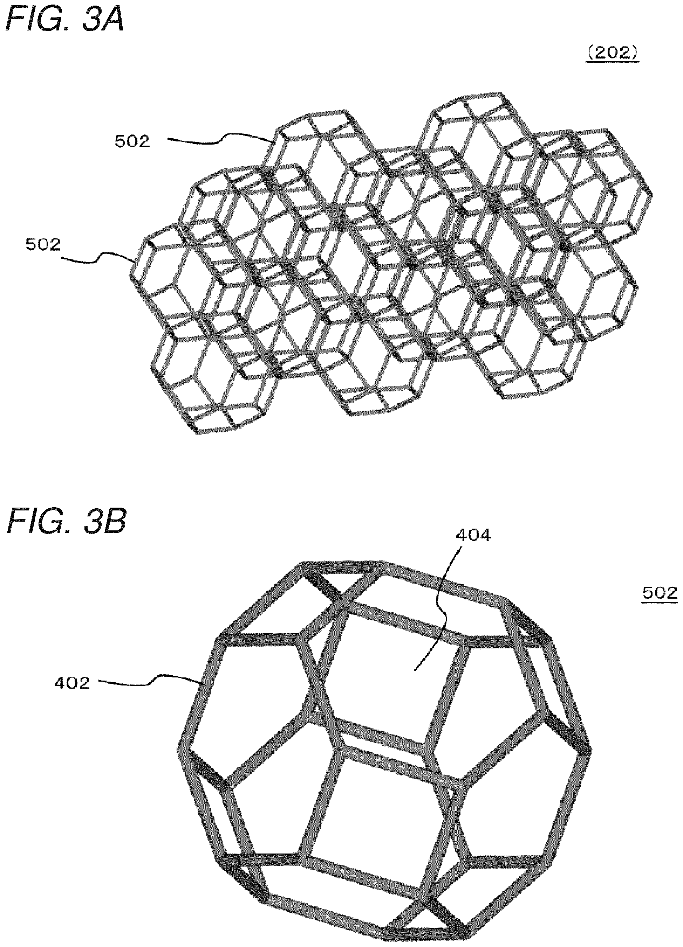

FIGs. 3A and 3B are diagrams explaining a modified example of the configuration of the hollow containing region 202. FIG. 3A is a diagram schematically illustrating the configuration of the hollow containing region 202 in the modified example. FIG. 3B schematically illustrates a shape of a polyhedron 502 arranged in the hollow containing region 202 of the modified example.

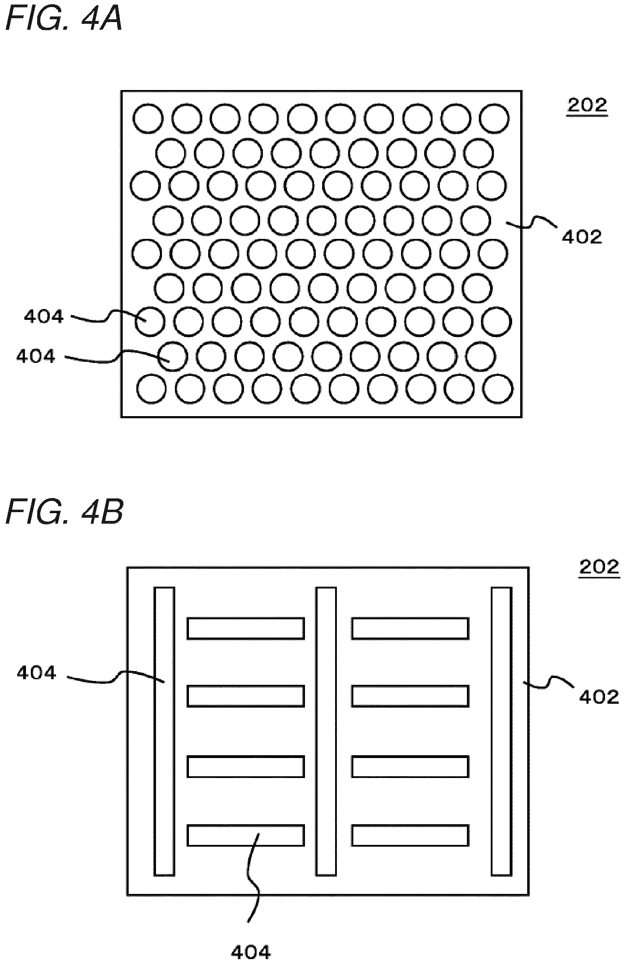

FIGs. 4A and 4B are diagrams explaining further modified examples of the configuration of the hollow containing region 202. FIG. 4A is a diagram illustrating the configuration of the hollow containing region 202 in a further modified example. FIG. 4B is a diagram illustrating the configuration of the hollow containing region 202 in a further modified example.

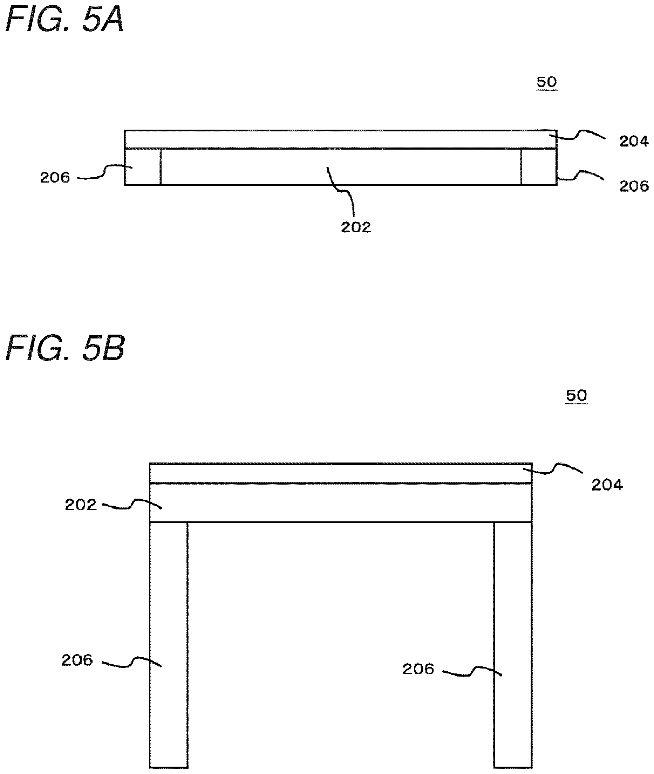

FIGs. 5A and 5B are diagrams explaining modified examples of the configuration of the shaped object 50. FIG. 5A illustrates the configuration of the shaped object 50 of a modified example. FIG. 5B illustrates a configuration of the shaped object 50 of a further modified example.

### DETAILED DESCRIPTION OF EMBODIMENTS

Hereinbelow, embodiments of the present disclosure will be described with reference to the drawings. FIGs. 1A to 1C are diagrams explaining a manufacturing method for a shaped object according to an embodiment of the present disclosure. FIG. 1A illustrates an example of a primary configuration of a shaping apparatus 10 used for shaping a shaped object. FIG. 1B illustrates an example of a configuration of a head 12 in the shaping apparatus 10.

Except for structural features hereinafter described, the shaping apparatus 10 may have features similar or identical to those of any known apparatuses. Specifically, the shaping apparatus 10, except for structural features hereinafter described, may be configured similarly or identically to any known apparatuses that perform shaping by ejecting liquid droplets of a material of the shaped object 50 from an ink jet head. In addition to the illustrated components, the shaping apparatus 10 may include mechanism(s) and device(s) that may be necessary to shape and/or color the shaped object 50.

In this embodiment, the shaping apparatus 10 is a shaping apparatus (3D printer) configured to shape a three-dimensional shaped object 50 using a layer forming method. In this case, the layer forming method is a method that shapes the shaped object 50 by layering a plurality of layers, for example. The shaped object 50 is a three-dimensional structure, for example. Further, in this embodiment, the shaping apparatus 10 includes a head 12, a shaping stage 14, a scan actuator 16, and a controller 20.

The head 12 is a unit that ejects a material of the shaped object 50 (shaped object material). Further, in this embodiment, ink is used as the material of the shaped object 50. In this case, the ink is liquid to be ejected from an ink jet head, for example. The ink jet head is an ejection head that ejects ink droplets using an ink jet scheme, for example.

Further, more specifically, the head 12 ejects ink that cures according to a predetermined condition as the material of the shaped object 50 from a plurality of ink jet heads. Further, respective layers configuring the shaped object 50 are formed by being layered by curing the ejected ink. Further, in this embodiment, ultraviolet curing ink (UV ink) that cures from its liquid state by irradiation of ultraviolet light is used as the ink.

Further, in addition to the material of the shaped object 50, the head 12 further ejects a support material, which is a material of a support layer. In this case, the support layer is a layered structure to be formed underneath an overhanging shape portion in shaping of the shaped object 50 having the overhanging shape, for example. The support layer is formed as needed during the shaping of the shaped object 50, and is removed when the shaping is completed.

The shaping stage 14 is a stage-like member for supporting the shaped object 50 during the shaping, is arranged at a position facing the ink jet heads in the head 12, and allows the shaped object 50 being shaped to be mounted on its top surface. Further, in this embodiment, the shaping stage 14 has a configuration in which at least its top surface is movable in a layering direction (Z direction in the drawings), and it moves at least the top surface according to progression of the shaping of the shaped object 50 by being driven by the scan actuator 16. In this case, the layering direction is a direction along which the shaping material is layered in the layer forming method, for example. Further, more specifically, in this embodiment, the layering direction is a direction that intersects perpendicularly to a main scanning direction (Y direction in the drawings) and a sub scanning direction (X direction in the drawings).

The scan actuator 16 is an actuator for causing the head 12 to perform a scanning operation of relatively moving with respect to the shaped object 50 that is being shaped. In this case, relatively moving with respect to the shaped object 50 that is being shaped means to move relatively with respect to the shaping stage 14, for example. Further, causing the head 12 to perform the scanning operation means to cause the ink jet heads included in the head 12 to perform scanning operations, for example. Further, in this embodiment, the scan actuator 16 causes the head 12 to perform a main scanning operation (Y scan), a sub scanning operation (X scan), and a layering direction scan (Z scan).

The main scanning operation is an operation of ejecting the ink while moving in the main scanning direction, for example. In this embodiment, the scan actuator 16 fixes a position of the shaping stage 14 in the main scanning direction and moves a head 12 side to cause the head 12 to perform the main scanning operation. Further, the scan actuator 16 may move a shaped object 50 side by fixing a position of the head 12 in the main scanning direction for example, and moving the shaping stage 14, for example.

The sub scanning operation is an operation of relatively moving with respect to the shaping stage 14 in the sub scanning direction that intersects perpendicularly to the main scanning direction, for example. Further, more specifically, the sub scanning operation is an operation of relatively moving with respect to the shaping stage 14 in the sub scanning direction by a preset feed amount, for example. In this embodiment, the scan actuator 16 fixes a position of the head 12 in the sub scanning direction and moves the shaping stage 14 in between the main scanning operations to cause the head 12 to perform the sub scanning operation. Further, the scan actuator 16 may cause the head 12 to perform the sub scanning operation by fixing a position of the shaping stage 14 in the sub scanning direction and moving the head 12.

The layering direction scan is an operation to move the head 12 in the layering direction relatively with respect to the shaped object 50 by moving at least one of the head 12 and the shaping stage 14 in the layering direction, for example. Further, the scan actuator 16 adjusts a relative position of the ink jet heads with respect to the shaped object 50 during the shaping in the layering direction by causing the head 12 to perform the layering direction scan according to the progress in the shaping operation. Further, more specifically, in this embodiment, the scan actuator 16 fixes a position of the head 12 in the layering direction and moves the shaping stage 14. The scan actuator 16 may fix a position of the shaping stage 14 in the layering direction and may move the head 12.

The controller 20 is a CPU of the shaping apparatus 10, for example, and controls the shaping operation in the shaping apparatus 10 by controlling respective members of the shaping apparatus 10. More specifically, the controller 20 controls the respective members of the shaping apparatus 10 on the basis of shape information, color information, and the like of the shaped object 50 to be shaped, for example. According to this embodiment, the shaped object 50 can suitably be shaped.

Next, more specific configurations of the head 12 will be described. In this embodiment, the head 12 includes a plurality of ink jet heads, a plurality of ultraviolet light sources 104, and a flattening roller 106. Further, as the plurality of ink jet heads, as illustrated in FIG. 1B, it includes an ink jet head 102s, an ink jet head 102w, an ink jet head 102y, an ink jet head 102m, an ink jet head 102c, an ink jet head 102k, and an ink jet head 102t.

The plurality of ink jet heads are arranged along the main scanning direction by having their positions in the sub scanning direction match each other, for example. Further, each of the ink jet heads includes a nozzle row in which a plurality of nozzles are arranged in a predetermined nozzle row direction on its surface facing the shaping stage 14. Further, in this embodiment, the nozzle row direction is a direction parallel to the sub scanning direction.

Further, among these ink jet heads, the ink jet head 102s is an ink jet head for ejecting a support material. A known material for support layers may suitably be used as the support material, for example.

It should be noted that, as described above, in this embodiment, the support material is a material that is to be removed when the shaping of the shaped object 50 is completed. Further, of the ink to be ejected from the respective ink jet heads in the head 12, the ink with respective colors other than the support material are examples of a shaped object material, which is a material that configures the shaped object 50 when the shaping is completed.

The ink jet head 102w is an ink jet head for ejecting white (W) ink. The white ink is an example of a light reflective ink, and is used for example when a region with a property of reflecting light (light reflecting region) is to be formed in the shaped object 50. Further, in this embodiment, the white ink also serves as shaping material ink.

It should be noted that the shaping material ink is ink to be used also for formation of regions other than portions related to coloring in the shaped object 50, for example. Further, in modified examples of the configuration of the shaping apparatus 10, dedicated shaping material ink (Mo ink) may be used instead of using the white ink as the shaping material ink, for example. In this case, the head 12 further includes an ink jet head for the dedicated shaping material ink. Further, as the shaping material ink, any ink other than the support material may be used.

The ink jet head 102y, the ink jet head 102m, the ink jet head 102c, and the ink jet head 102k (hereinbelow termed "ink jet heads 102y to 102k") are coloring ink jet heads used when shaping a shaped object 50 which is colored. More specifically, the ink jet head 102y ejects yellow (Y) ink. The ink jet head 102m ejects magenta (M) ink. The ink jet head 102c ejects cyan (C) ink. Further, the ink jet head 102k ejects black (K) ink. Further, in this case, the colors of YMCK are examples of process colors used for a full-color representation using a subtractive color mixing method. Further, the ink jet head 102t is an ink jet head that ejects transparent ink. The transparent ink is clear ink having no color and being transparent (T), for example.

The plurality of ultraviolet light sources 104 are light sources (UV light sources) for curing the ink, and generates ultraviolet light for curing the ultraviolet curing ink. Further, in this embodiment, each of the plurality of ultraviolet light sources 104 is arranged at one end side and the other end side in the main scanning direction of the head 12 so as to interpose the arrangements of the ink jet heads in between them. As the ultraviolet light sources 104, UV LEDs (ultraviolet LEDs) may suitably be used, for example. Further, as the ultraviolet light sources 104 metal halide lamps, mercury lamps, and the like may also be used.

The flattening roller 106 is used for flattening ink layer formed during the shaping of the shaped object 50. The flattening roller 106 flattens the ink layers by making contact with a surface of an ink layer to remove a part of the uncured ink therefrom during the main scanning operation, for example.

By using the head 12 having the above configuration, the ink layers configuring the shaped object 50 can suitably be formed. Further, by forming a plurality of ink layers by layering them in the layering direction, the three-dimensional shaped object 50 can suitably be manufactured.

It should be noted that the specific configuration of the head 12 is not limited to the configuration described above, and various modifications may be made thereto. For example, the head 12 may further include ink jet heads for colors other than the above as coloring ink jet heads. Further, the arrangement of the plurality of ink jet heads in the head 12 may be modified in various ways. For example, some of the ink jet heads may have their positions in the sub scanning direction displaced from other ink jet heads.

Next, characteristics of the shaped object 50 to be manufactured using the shaping apparatus 10 will be described. FIG. 1C is a diagram schematically illustrating an example of the configuration of the shaped object 50 to be manufactured in this embodiment.

In this embodiment, a wide three-dimensional object having a width of 3 cm or more in a plane perpendicularly intersecting the layering direction is shaped as the shaped object 50, for example. In this case, the width in the plane perpendicularly intersecting the layering direction is a maximum width of the shaped object 50 in this plane. Further, the characteristics of the present embodiment described below become prominent especially in cases where the width in the plane direction perpendicularly intersecting the layering direction is large. Due to this, for example, the width in the plane direction perpendicularly intersecting the layering direction may for example be 5 cm or more. Further, for example, this width may for example be 10 cm or more.

Further, as illustrated in the drawings, in this embodiment, a three-dimensional object having a substantially plate shape, which has a small height in the layering direction as compared to its width in the plane direction perpendicularly intersecting the layering direction, is shaped as the shaped object 50, for example. In this case, the height of the shaped object 50 in the layering direction is for example one-third (1/3) or less with respect to the width in the plane direction perpendicularly intersecting the layering direction. Further, the height of the shaped object 50 may for example be one-fifth (1/5) or less with respect to the width in the plane direction perpendicularly intersecting the layering direction.

Further, as the shaped object 50, for example, a three-dimensional object of which upper side surface (top surface) in the layering direction is at least colored may be shaped. More specifically, as the shaped object 50, for example, a relief having a design depicted on its top surface, a diorama having a topographical map formed on its top surface, and the like may be shaped.

Further, as the shaped object 50, as illustrated for example in the drawings, the shaped object 50 having the configuration of including a hollow containing region 202 and an upper shaping region 204, each of which is a region formed by layering plural layers of ink, may be shaped. In this case, the hollow containing region 202 is an example of a first region in the shaped object 50, and is formed of the white ink, for example. Further, in this embodiment, the hollow containing region 202 is a region that is not directly related to the design and the like depicted on the top surface of the shaped object 50. Due to this, the hollow containing region 202 may be formed by any ink other than the support material. Further, although depiction is simplified in the drawings, in this embodiment, the hollow containing region 202 is a region having numbers of hollows inside a honeycomb structure and the like, for example.

Further, the upper shaping region 204 is an example of a second region in the shaped object 50, and is formed by being layered on the hollow containing region 202 in the layering direction. Further, in this embodiment, the upper shaping region 204 is a region where the top surface is to be colored, and includes a light reflecting region and a colored region. Further, in this case, the light reflecting region and the colored region are arranged so that the light reflecting region is located on a lower side (hollow containing region 202 side) and the colored region is located on an upper side (outer side) on the hollow containing region 202 in the layering direction. By configuring as above, for example, the top surface of the shaped object 50 can suitably be colored.

It should be noted that, in this embodiment, upper and lower sides in the layering direction is not necessarily identical to upper and lower sides in a direction of gravity, but rather they refer to upper and lower sides among layers to be formed in order in the operation of the layer forming method. Further, in this case, a layer to be formed first becomes the lower layer, and a layer to be formed later becomes the upper layer.

Next, the configuration of the shaped object 50 will be described in further detail. FIGs. 2A to 2F illustrate an example of a more specific configuration of the shaped object 50. FIGs. 2A and 2B are perspective diagrams of an example of the configuration of the shaped object 50, illustrating the example of the configuration of the shaped object 50 as seen from upper side and lower side in the layering direction. Further, FIGs. 2C to 2F illustrate examples of respective regions by focusing on the upper shaping region 204 and the hollow containing region 202 in the shaped object 50. Further, in the examples illustrated in the drawings, the shaped object 50 is a three-dimensional object of a diorama, on the top surface of which a colored topographical map is formed.

As described above, in this embodiment, the shaped object 50 includes the hollow containing region 202 and the upper shaping region 204. The hollow containing region 202 is the honeycomb structure region having a large number of hollows therein. Further, the upper shaping region 204 is a region having the shape and colors corresponding to the topographical map formed on the upper surface of the shaped object 50.

FIGs. 2C and 2D are diagrams that further explain the upper shaping region 204. These figures extract the upper shaping region 204 in the shaped object 50 and illustrate an example of the upper shaping region 204 by seeing it from upper and lower sides thereof in the layering direction. Further, as described above, in this embodiment, the upper shaping region 204 includes the light reflecting region 302 and the colored region 304.

The light reflecting region 302 is a region with light reflecting performance formed with the white ink. In this embodiment, the light reflecting region 302 is formed with a thickness of a predetermined range so as to cover an entirety of the upper surface of the hollow containing region 202. In this case, covering the entirety of the upper surface of the hollow containing region 202 means to cover the upper surface of the hollow containing region 202 so as to cover the holes formed on the upper surface of the hollow containing region 202 with the hollows in the hollow containing region 202, for example. Further, more specifically, in this embodiment, the light reflecting region 302 is formed with a constant thickness along the shape of the upper surface of the shaped object 50. Due to this, for example, when the upper surface of the shaped object 50 has a shape with surface projection and recess, the shape of the light reflecting region 302 comes to have a thin plate-like shape which changes according to the projection and the recess of the upper surface.

Further, the colored region 304 is a region that is colored in the shaped object 50. In this embodiment, the colored region 304 is formed using the ink of respective colors of YMCK and the transparent ink. In this case, the coloring using the subtractive color mixing method can appropriately be performed by forming the colored region 304 on the light reflecting region 302. Further, by suitably adjusting color and proportion of the ink to be used according to the color to be applied, coloring using full colors can be performed on the colored region 304.

Further, FIGs. 2E and 2F are diagrams describing the hollow containing region 202 in further detail. FIG. 2E is a cross sectional diagram of the hollow containing region 202 illustrating an example of the configuration of the hollow containing region 202, and illustrates the example of the configuration of the cross section of the hollow containing region 202 in a plane perpendicularly intersecting the layering direction. FIG. 2F is a perspective diagram of the hollow containing region 202 when seen from a lower side in a layering direction.

In this embodiment, the hollow containing region 202 is a honeycomb structure region having a model portion 402 and hollows 404. In this case, the honeycomb structure region is a region with a structure as illustrated in the drawings in which hollow equilateral hexagonal pillars are arranged without any intervals between them, for example.

Further, in this case, in the hollow containing region 202, the model portion 402 is a portion configured of side surfaces of the respective equilateral hexagonal pillars, and is formed by the white ink. Further, in a modified example of the shaped object 50, the model portion 402 may be formed by any ink other than the support material. Further, the hollows 404 are hollow portions surrounded by the side surfaces of the respective equilateral hexagonal pillars, and are formed so as to penetrate the hollow containing region 202 in the layering direction. Due to this, in a state where the shaping is completed, the cross section of the hollow containing region 202 at a voluntary position in the layering direction comes to have a plane having a plurality of holes corresponding to the plurality of hollow containing region 202.

Further, in this embodiment, the plurality of equilateral hexagonal pillars configuring the hollow containing region 202 are an example of a plurality of three-dimensional figures arranged within the hollow containing region 202. Further, these equilateral hexagonal pillars are equilateral hexagonal pillars that are of the same size having hollows, and are arranged to align within the hollow containing region 202 by setting an axial direction of the equilateral hexagonal pillars parallel to the layering direction, and with one of the side surfaces of adjacent equilateral hexagonal pillars being a common surface.

Further, during the shaping of the shaped object 50, the support material is filled in each of the hollows 404 in the hollow containing region 202. More specifically, in this case, the model portion 402 around the hollows 404 is formed by forming insides of the portions in the hollow containing region 202 to be the hollows 404 with the support material, and forming a region surrounding the portions to be the hollows 404 with the white ink and the like. Further, due to this, the hollow containing region 202 having the honeycomb structure is formed in a state where the insides of the hollows 404 are filled with the support material. By configuring as above, the upper shaping region 204 can suitably be formed on the hollow containing region 202 even in a case where the hollows 404 are formed within the hollow containing region 202.

Further, in this embodiment, the hollow containing region 202 is a region of which lower surface is exposed to outside of the shaped object 50. More specifically, in the shaped object 50 of this embodiment, the hollow containing region 202 is a lowermost region in the layering direction. In this case, for example, the support material within the hollows 404 of the hollow containing region 202 can suitably be removed from a lower surface side of the shaped object 50 before completion of the shaping. Further, due to this, the hollow containing region 202 including the plurality of hollows 404 can suitably be formed.

Further, in considering this feature in a more generalized term, the lower surface of the hollow containing region 202 being exposed to the outside of the shaped object 50 may mean that the lower surface of the hollow containing region 202 is exposed to the outside of the shaped object 50 in a state where the shaping is completed, for example, without being limited to the case where the hollow containing region 202 is the lowermost region in the shaped object 50. Further, in this case, during the shaping, for example, a structure that is to be removed after the shaping (such as the support layer and the like) may be formed under the hollow containing region 202 as needed. In this case as well, the support material within the hollows 404 of the hollow containing region 202 can suitably be removed before the completion of the shaping. Further, when giving a consideration with the above case included, the hollow containing region 202 may be regarded as a region that includes a lowermost portion in the layering direction among portions to be formed continuously in the layering direction, for example.

Here, when respective layers configuring the shaped object 50 are to be formed by curing the ink, a volume of the ink may be expected to change slightly upon curing due to a curing shrinkage or the like. Further, in this case, stress may be expected to occur in the ink layers due to this volume change. Further, this stress is expected to become greater when a length connecting linearly in a plane perpendicularly intersecting the layering direction is longer. Due to this, in a case of shaping a shaped object 50 having a substantially plate-like shape, such as a shaped object 50 having a relief-like shape or a shaped object 50 having a diorama-like shape, for example, when respective layers of the shaped object 50 are just formed, warping easily occurs in the cured ink layers due to an influence of this stress. Further, when such warping occurs, it may become difficult to shape the shaped object 50 with high accuracy. Further, for example, when such warping occurs, there also is a risk that the layer in a warped state may make contact with the ink jet heads in the head 12 (see FIGs. 1A to 1C), and the shaping operation may be hindered.

In regard to this, in this embodiment, the cross section of the hollow containing region 202 at the voluntary position in the layering direction can be formed as a discontinuous surface by the large number of holes. Further, in this case, the length where the model portion 402 connects linearly in the plane perpendicularly intersecting the layering direction can be made significantly shorter as compared to a case of not forming the hollows 404. Further, due to this, the influence of the stress generated upon the curing is suppressed, and the warping and the like in the ink layers can suitably be prevented.

Further, as described above, in this embodiment, the hollow containing region 202 is the region that includes the lowermost portion in the layering direction among the portions continuously formed in the layering direction. Further in this case, the warping and the like in the ink layers can suitably be prevented at a beginning of the shaping operation when the ink layer is especially susceptible to warping.

Further, in this case, by forming the upper shaping region 204 on the hollow containing region 202 formed in a state where the warping is suppressed, warping can suitably be prevented also in the upper shaping region 204. Further, due to this, for example, the warping and the like can suitably be prevented for the upper shaping region 204 as well. Due to this, according to this embodiment, the shaped object 50 can suitably be shaped with high accuracy, for example.

Further, in this embodiment, the thickness of the upper shaping region 204 can be made thin by providing the upper shaping region 204 only in a vicinity of the upper surface of the shaped object 50. By configuring as above, for example, stress generated in the upper shaping region 204 as a whole can suitably be reduced. Further, due to this, the warping and the like occurring in the upper shaping region 204 can more suitably be prevented.

It should be noted that, as it is apparent from the above description, in this embodiment, the upper shaping region 204 is unlike the hollow containing region 202, and is a surface of which cross section at a voluntary position in the layering direction is continuous. In this case, the cross section being continuous refers to a state in which no hole or the like is intentionally formed in the cross section, for example. Further, the holes in the cross section are not holes formed intentionally as a part of the shape of the appearance of the shaped object, for example, but are holes formed inside the shaped object. Due to this, for example, in a case of forming a shaped object 50 having a doughnut-like shape, a hole or the like of this doughnut does not correspond to the holes in the cross section. Further, intentionally forming the holes or the like means to form the holes or the like intentionally as the shape of the shaped object, for example.

Next, modified examples and the like of the configuration of the shaped object 50 to be shaped by the shaping apparatus 10 of the present embodiment will be described. In the above, the explanation is given primarily for the case of forming the hollow containing region 202 with the honeycomb structure in which the same-sized, hollow equilateral hexagonal pillars are arranged. However, the size of the equilateral hexagonal pillars configuring the honeycomb structure may not necessarily be all the same, but equilateral hexagonal pillars with different sizes, with different types of sizes may be arranged. In this case, the sizes of the equilateral hexagonal pillars refer to sizes of hexagons in cross sections of the equilateral hexagonal pillars perpendicularly intersecting the axial direction, for example. Further, in this case, more specifically, the size of the equilateral hexagonal pillars at a portion closer to a center of the shaped object 50 may be made large, and the sizes of the equilateral hexagonal pillars may be made smaller toward the outer side, for example. Further, for example, the sizes of the equilateral hexagonal pillars may randomly be changed within the hollow containing region 202.

Further, in the above, the example of the configuration of the hollow containing region 202 is described primarily for the case of configuring the hollow containing region 202 with one layer of the honeycomb structure. However, the hollow containing region 202 may be divided into a plurality of regions in the layering direction, for example, and configuring those regions as different honeycomb structures. In this case, for example, the honeycomb structures of the respective regions may be arranged with their positions in the plane perpendicularly intersecting the layering direction displaced from each other. Further, for example, the sizes of the equilateral hexagonal pillars configuring the honeycomb structures may be set differently for each region.

Further, in the above, in regard to the equilateral hexagonal pillars configuring the honeycomb structure, a case of configuring an entirety of the side surfaces by the model portion 402 is primarily described. However, in modified examples of the configuration of the shaped object 50, only the sides of the equilateral hexagonal pillars may be configured by the model portion 402 instead of the entirety of the side surfaces, for example.

Further, when the honeycomb structure is considered in a broader sense, it may be regarded as a structure in which three-dimensional figures are arranged to align without any intervals therebetween without being limited to the equilateral hexagonal pillars (three-dimensional space-filling structure). In this case, in the state after the completion of the shaping, the hollow containing region 202 becomes a region having a shape in which plural hollow three-dimensional figures are arranged to align, for example. Further, in this case, the plural three-dimensional figures are preferably arranged to align without any intervals therebetween by having a common side or surface between adjacent figures.

FIGs. 3A and 3B are diagrams explaining a modified example of the configuration of the hollow containing region 202. FIG. 3A is a diagram schematically illustrating the configuration of the hollow containing region 202 in this modified example, and illustrates an example of a manner by which polyhedrons 502, which are hollow three-dimensional figures, are arranged to align within the hollow containing region 202. FIG. 3B is a diagram schematically illustrating a shape of the polyhedrons 502 arranged to align within the hollow containing region 202 of the present modified example.

As illustrated in the diagrams, in this modified example, the hollow containing region 202 after the completion of the shaping is a region in which the plural hollow polyhedrons 502 are arranged to align therein. Further, the plurality of polyhedrons 502 in the hollow containing region 202 are formed to align within the hollow containing region 202 by having one surface and sides surrounding this surface as common surface and sides between adjacent polyhedrons 502.

Further, in this case, the polyhedrons 502 may have only portions of their sides formed with the ink that remains even after the completion of the shaping (such as the white ink) as illustrated in the drawings, for example. In this case, only the portions of the sides of the polyhedrons 502 become the model portion 402 in the hollow containing region 202, and other portions become the hollows 404.

Further, in this case as well, during the shaping of the hollow containing region 202 and the upper shaping region 204 (see FIGs. 2A to 2F), the insides of the hollows 404 of the hollow containing region 202 are filled by the support material. By configuring as above, the hollow containing region 202 having the plurality of hollows 404 can suitably be formed. Further, due to this, the shape having the plurality of holes in the cross-sectional shape at a voluntary position in the layering direction of the hollow containing region 202 can suitably be formed.

Further, more specifically, in the configuration illustrated in the drawings, each of the plurality of polyhedrons 502 arranged to align in the hollow containing region 202 is a truncated octahedron. By configuring as above, for example, a large number of polyhedrons 502 can suitably be formed in the hollow containing region 202. Further, in this case, each of the polyhedrons 502 includes a side extending in an oblique direction nonparallel to the layering direction. A side extending in the oblique direction nonparallel to the layering direction is a side that is nonparallel to the layering direction and is intersecting with the layering direction at an angle other than the right angle, for example. By configuring as above, for example, even if only the sides of the polyhedrons 502 are formed as the model portion 402, strength of the hollow containing region 202 can suitably be reinforced.

Further, a further modified example of the configuration of the hollow containing region 202 may have a configuration in which polyhedrons 502 with shapes other than the truncated octahedrons are arranged to align. In this case as well, polyhedrons 502 including sides extending in the oblique direction nonparallel to the layering direction may be used as at least some of the polyhedrons 502 in the hollow containing region 202. Further, in this case, for example, not only one type of polyhedrons 502 may be used, but plural types of polyhedrons 502 with different shapes from each other may be used.

Further, in the above, the configuration of the polyhedrons 502 primarily described has only their portions of the sides made as the model portion 402. However, as for the configuration of the polyhedrons 502, other configurations may be used so long as the hollows 404 are formed when the shaping is completed, and so long as the support material filled into the hollows 404 during the shaping are removable. In this case, for example, a configuration having an opening provided at least at a part of one of surfaces may be used as each polyhedron 502 of the hollow containing region 202. Even in configuring as above, the support material can suitably be removed by configuring the hollows 404 of the polyhedrons 502 of the hollow containing region 202 such that the hollows 404 are connected via openings of those polyhedrons 502.

Further, depending on, for example, the characteristic of the ink used in the shaping and the quality required in the shaping, the three-dimensional figures may not necessarily be arranged without any interval therebetween within the hollow containing region 202, and a simpler configuration may be used, such as employing a shape having a plurality of holes in its cross-sectional shape at a voluntary position in the layering direction of the hollow containing region 202.

FIGs. 4A and 4B are diagrams explaining further modified examples of the configuration of the hollow containing region 202. FIG. 4A is a diagram illustrating the configuration of the hollow containing region 202 in a further modified example. In this modified example, the hollow containing region 202 is formed such that a plurality of holes having a circular shape in their cross section perpendicularly intersecting the layering direction are arranged to align therein. In this case, insides of the holes become the hollows 404 in the hollow containing region 202. Further, portions other than the holes in the hollow containing region 202 become the model portion 402. Further, in this case, the plurality of holes are holes that penetrate the hollow containing region 202, for example, and are formed by being uniformly arranged in the hollow containing region 202.

Even with this configuration, the cross-sectional shape of the hollow containing region 202 at a voluntary position in the layering direction becomes a shape having the plurality of holes. Due to this, in this case as well, as compared to the case of forming a region with the configuration not having any holes in its cross section, the stress generated when the ink layers are formed can suitably be reduced. Further, due to this, for example, warping in the ink layers can suitably be prevented from occurring.

Further, in regard to the shape of the holes to be formed in the hollow containing region 202, it is not limited to holes with the circular cross section, but holes with other shapes may be used. FIG. 4B is a diagram illustrating the configuration of the hollow containing region 202 in a further modified example. In this modified example, the hollow containing region 202 is formed such that a plurality of elongate holes having a shape of its cross section perpendicularly intersecting the layering direction are rectangular. In this case, insides of the holes become the hollows 404 in the hollow containing region 202. Further, portions other than the holes in the hollow containing region 202 become the model portion 402. Further, more specifically, in this modified example, plural types of rectangles of which shapes differ from each other are used as the rectangles in the cross-sectional shape as shown in the drawing. Further, the plurality of holes are arranged substantially uniformly within the hollow containing region 202 by arranging them in a certain cyclic pattern.

Even with this configuration, the cross-sectional shape of the hollow containing region 202 at a voluntary position in the layering direction becomes a shape having the plurality of holes. Due to this, in this case as well, as compared to the case of forming a region with the configuration not having any holes in its cross section, the stress generated when the ink layers are formed can suitably be reduced. Further, due to this, for example, warping in the ink layers can suitably be prevented from occurring.

Further, in considering the configuration of the hollow containing region 202 in a more generalized term, it may be regarded as a configuration in which an area occupied by the model portion 402 is reduced in the cross section of the hollow containing region 202. More specifically, as the specific configuration of the hollow containing region 202, as described above, various configurations including the model portion 402 and the hollows 404 may be considered. Further, in this case, to suitably suppress the warping of the ink layers, it is assumed preferable to set a ratio of the area presented by the model portion 402 in the cross section at a voluntary position in the layering direction to be equal to or less than a certain level. In this case, the area occupied by the model portion 402 refers to an area of the portion formed by the shaped object material, such as the white ink, within the cross section of the hollow containing region 202.

Further, more specifically, the area occupied by the model portion 402 in the cross section of the hollow containing region 202 at a voluntary position in the layering direction is preferably equal to or less than 50% of an area of the cross section. Further, a ratio of the area occupied by the model portion 402 is preferably equal to or less than 30%, and more preferably equal to or less than 10%. By configuring as above, for example, by sufficiently reducing a ratio of the portion other than the holes in the cross section, the warping of the ink layers can more suitably be prevented.

Further, in the above, the hollow containing region 202 and the upper shaping region 204 (see FIGs. 2A to 2F) are primarily described regarding the configuration of the shaped object 50. However, in a modified example of the shaped object 50, a shaped object 50 further including a region other than the hollow containing region 202 and the upper shaping region 204 may be shaped.

FIGs. 5A and 5B are diagrams explaining modified examples of the configuration of the shaped object 50. FIG. 5A illustrates the configuration of the shaped object 50 of a modified example. In the above, the configuration in which the hollow containing region 202 includes an entirety of the lower surface of the shaped object 50 is primarily described. However, in the modified example of the configuration of the shaped object 50, a region other than the hollow containing region 202 may be formed at a part of the lower surface of the shaped object 50.

More specifically, in FIG. 5A, a configuration for a case of forming a frame-like normal shaping region 206 around the hollow containing region 202 is illustrated. In this case, the normal shaping region 206 is a normal region that does not include any hollows in its inside. Further, as for the normal shaping region 206, it may be formed by any ink other than the support material.

Even with this configuration, the warping in the ink layers can suitably be prevented in the portion forming the hollow containing region 202. Further, due to this, warping can suitably be prevented in the upper shaping region 204 to be formed thereon as well. Further, in this case, it is preferable to provide a configuration in which the hollow containing region 202 and the upper shaping region 204 are included in a portion especially prone to warp, or in a portion where, for example, a high flatness is required within respective portions of the shaped object 50.

Further, in this case, as for the portion where the normal shaping region 206 is to be formed in the lower surface of the shaped object 50, when a width of the normal shaping region 206 is sufficiently narrow, for example, a problem of warping is usually less likely to occur. Further, in this case, by forming the hollow containing region 202 in a region adjacent to the normal shaping region 206, for example, the warping will occur less in the normal shaping region 206 as well. Especially as in the illustrated configuration, when the hollow containing region 202 is to be formed in a region surrounded by the frame-like normal shaping region 206, the warping of the normal shaping region 206 can more suitably be prevented.

Further, in the above, the case of forming the hollow containing region 202 to include the lowermost surface in the entirety of the shaped object 50 is primarily described. However, depending on the shape and the like of the shaped object 50, the hollow containing region 202 may be formed at portions other than the lowermost surface of the shaped object 50.

FIG. 5B illustrates a configuration of the shaped object 50 of a further modified example. As described above, to suitably prevent the warping in the ink layers, it is preferable to use the hollow containing region 202 as the lowermost portion in the layering direction within the portions to be formed continuously in the layering direction. Further, in this case, depending on the shape of the shaped object, there may be a case where warping needs to be prevented for a portion of which formation is to begin at a position above the lowermost surface in the shaped object 50.

More specifically, for example, when shaping a shaped object 50 having a table-like shape as illustrated, leg portions of this desk becomes portions where warping is less likely to occur since their width in a plane perpendicularly intersecting the layering direction is small. Due to this, the leg portions may be formed as the normal shaping regions 206 without forming the hollow containing region 202 and the like.

Contrary to this, a stage portion of the desk has a larger width in the plane perpendicularly intersecting the layering direction, and it is a portion where a high flatness is required. Due to this, the stage portion is preferably formed with the configuration including the hollow containing region 202 and the upper shaping region 204. Further, in this case, the stage portion corresponds to the portion of which formation is to begin at a position above the lowermost surface in the shaped object 50. Due to this, in this modified example, a support layer may be formed at a portion where the normal shaping regions 206 are not to be formed under the hollow containing region 202, for example, and the hollow containing region 202 is formed thereon. By configuring as above, for example, the hollow containing region 202 and the like can suitably be formed at the position above the lowermost surface in the shaped object 50.

It should be noted that, as described above, the support layer is a configuration that is removed before the completion of the shaping. Due to this, as the support material, a soft material in which warping is less likely to occur as compared to the ink used in the formation of the respective layers configuring the shaped object 50 is normally used. Due to this, as in the present modified example, the warping can suitably be prevented even in the case of forming the hollow containing region 202 on the support layer.

Further, the specific shape of the shaped object 50 may be modified variously other than the illustrated configurations. In these cases as well, for example, the hollow containing region 202 and the upper shaping region 204 may be formed only at a part of the shaped object 50.

Next, supplemental explanations related to the configurations described above will be given. Further, hereinbelow, the configurations of the modified examples described above are collectively called the present embodiments, for the sake of easier explanation.

As above, the present embodiments prevent the warping in the ink layers by forming the hollow containing region 202 having the hollows therein. Regarding this feature, as a configuration that is seemingly similar to the configurations of the present embodiments, a configuration that forms the inside of the shaped object 50 by a honeycomb structure and the like may be considered, for example.

However, the present embodiments use the hollow containing region 202 as the lowermost portion in the layering direction within the portions formed continuously in the layering direction. With respect to this, in the case of simply forming the inside as the honeycomb structure, for example, normally, a lower surface forming a surface closing the hollows of the honeycomb structure is to be formed under the honeycomb structure. Further, in this case, warping is likely to occur in the ink layers during the formation of the lower surface. Further, as a result, the shaping of the shaped object 50 with high accuracy may become difficult. Due to this, it is preferable to form the hollow containing region 202 at the lowest part of the portions continuously formed in the layering direction as described above.

Further, in regard to the configuration that uses the honeycomb structure and the like as the inside of the shaped object 50, one or more holes may be formed in the lower surface forming the surface closing the hollows of the honeycomb structure for a purpose of, for example, removing the support layer. However, in this case as well, the lower surface of such a shaped object 50 may be considered as another region distinguished from the portion of the honeycomb structure and the like thereon. Further, more specifically, in such a case, when the ratio of the area that the model portion occupies in the cross section of the voluntary position in the layering direction is considered, this ratio can be said as being apparently distinguishable between the portion of the honeycomb structure and the like and the lower surface. Due to this, in such a case, depending on the shape of the shaped object 50, warping is more likely to occur during the formation of the lower surface.

With respect to this, as described above, in the case of the hollow containing region 202 in the present embodiments, by focusing on the ratio of the area occupied by the model portion in the cross section of the voluntary position in the layering direction, it can be thought that a honeycomb structure and the like is formed including the lower surface and the like of the shaped object 50. Further, more specifically, in the case of the configuration of the present embodiment described with illustrations in FIGs. 2A to 4B, the ratio of the area occupied by the model portion in the cross section of the voluntary position in the layering direction is substantially same regardless of where the position is in the layering direction. In this case, the ratio of the area occupied by the model portion being substantially the same means for example that a difference in the ratios present depending on positions in the layering direction is within a range determined according to the shape of the three-dimensional figures formed in the hollow containing region 202. Due to this, according to the present embodiment, the warping in the ink layers can suitably be prevented even during the formation of the lowermost portion in the hollow containing region 202, for example.

Further, in the above, the case of using the ink jet method that ejects the shaping material using the ink jet heads is primarily described as the shaping method of the shaped object 50. However, as the method of shaping the shaped object 50 using the layer shaping method, methods other than the ink jet method (for example, laser beam lithography and the like) may be considered. Further, the problem that the warping in layers occur during the formation of the respective layers configuring the shaped object 50 may occur also in cases of performing the shaping with the methods other than the ink jet method. Due to this, as the method of forming the hollow containing region 202 and the upper shaping region 204 as in the present embodiments, applications to cases of shaping the shaped object 50 by methods other than the ink jet methods are also possible.

### INDUSTRIAL APPLICABILITY

The present disclosure can suitably be used as a manufacturing method for a shaped object, for example.

## Claims

1. A manufacturing method for shaping a three-dimensional shaped object (50) by layering a plurality of layers in a preset layering direction, the method comprising:
forming a first region (202) of the shaped object (50), which is formed by layering a plurality of layers in the layering direction; and
forming a second region (204) of the shaped object (50), which is formed by layering a plurality of layers in the layering direction on the first region (202),
wherein a cross section of the first region (202) at any position along the layering direction includes a plurality of holes, at least when shaping of the shaped object (50) is completed.

2. The manufacturing method for a shaped object (50) according to claim 1, wherein the first region (202) is a region with a honeycomb structure.

3. The manufacturing method for a shaped object (50) according to claim 1 or 2, wherein, in an operation of the forming of the first region (202), the first region (202) having a shape with the plurality of holes in the cross section when the shaping is completed is formed by forming a region having a plurality of portions that are to become hollow when the shaping is completed.

4. The manufacturing method for a shaped object (50) according to claim 3, wherein, in the operation of the forming of the first region (202), the first region (202) is formed by:
using a support material, which is a material to be removed when the shaping is completed, and a shaped object material, which is a material to configure the shaped object (50) when the shaping is completed, and
forming an inside of each of the portions that are to become hollow using the support material, and forming the region surrounding the portions that are to become hollow using the shaped object material.

5. The manufacturing method for a shaped object (50) according to any one of claims 1 to 4, wherein when the shaping is completed, the first region (202) is a region having a shape in which a plurality of hollow three-dimensional figures are arranged.

6. The manufacturing method for a shaped object (50) according to claim 5, wherein the plurality of three-dimensional figures are hollow polyhedrons, and are arranged to align within the first region (202) with at least one side of each three-dimensional figure being a common side with its adjacent three-dimensional figure.

7. The manufacturing method for a shaped object (50) according to claim 5 or 6, wherein the plurality of three-dimensional figures are hollow equilateral hexagonal pillars all having the same size, and are aligned within the first region (202) by setting an axial direction of the equilateral hexagonal pillars parallel to the layering direction, and with one of the side surfaces of adjacent equilateral hexagonal pillars being a common surface.

8. The manufacturing method for a shaped object (50) according to any one of claims 1 to 6, wherein
the plurality of three-dimensional figures are polyhedrons, each having an opening located at least at a part of one of their surfaces, and
at least one or more of the plurality of three-dimensional figures are polyhedrons, each having a side that is nonparallel to the layering direction.

9. The manufacturing method for a shaped object (50) according to claim 8, wherein the plurality of three-dimensional figures are truncated octahedrons.

10. The manufacturing method for a shaped object (50) according to claim 8, wherein plural types of polyhedrons having shapes that are different from each other are used as the plurality of three-dimensional figures.

11. The manufacturing method for a shaped object (50) according to any one of claims 1 to 10, wherein, when the shaping is completed, a lower surface of the first region (202) is exposed to outside of the shaped object (50).

12. The manufacturing method for a shaped object (50) according to any one of claims 1 to 11, wherein
in an operation of the forming of the first region (202), the first region (202) is formed by using a shaped object material, which is a material to configure the shaped object (50) when the shaping is completed, and
an area of a portion formed by the shaped object material in the cross section of the first region (202) at any position along the layering direction is equal to or less than 50% of an area of the cross section.

13. The manufacturing method for a shaped object (50) according to any one of claims 1 to 12, wherein, in operations of the forming of the first region (202) and of the forming of the second region (204), the first region (202) and the second region (204) are formed by ejecting a material used for the shaping from an ink jet head (12).

14. The manufacturing method for a shaped object (50) according to claim 13, wherein ultraviolet curing ink that cures by ultraviolet light irradiation is used as the material.

15. A shaping apparatus configured to shape a three-dimensional shaped object (50) by layering a plurality of layers in a preset layering direction, the apparatus comprising:
an ejection head (12) configured to eject a shaping material; and
a controller (20) configured to control operations of the ejection head (12),
wherein the controller (20) is configured to cause the ejection head to shape the shaped object (50), which includes: a first region (202) of the shaped object (50), which is formed by layering a plurality of layers in the layering direction; and a second region (204) of the shaped object (50), which is formed by layering a plurality of layers in the layering direction on the first region (202), and
wherein a cross section of the first region (202) at any position along the layering direction includes a plurality of holes at least when shaping of the shaped object (50) is completed.
